(19) **Europäisches Patentamt / European Patent Office / Office européen des brevets**

(11) **EP 4 113 025 A1**

(12) **EUROPEAN PATENT APPLICATION**

(43) Date of publication:
04.01.2023 Bulletin 2023/01

(21) Application number: 22181335.5

(22) Date of filing: 27.06.2022

(51) International Patent Classification (IPC):
**F24F 8/108** (2021.01)    **F24F 11/39** (2018.01)
**F24F 11/52** (2018.01)    **F24F 11/56** (2018.01)

(52) Cooperative Patent Classification (CPC):
**F24F 8/108; F24F 11/39; F24F 11/52; F24F 11/56**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2021 FI 20215765**

(71) Applicant: **UniqAir Oy**
**53810 Lappeenranta (FI)**

(72) Inventor: **Malinen, Esa**
**53850 Lappeenranta (FI)**

(74) Representative: **Papula Oy**
**P.O. Box 981**
**00101 Helsinki (FI)**

(54) **NEURAL NETWORK BASED ESTIMATION OF AIR FILTER CAPACITY**

(57)    Example embodiments may relate to air purifiers. An apparatus may receive an indication of a control input configured to control the rate of an airflow through a filter and an indication of at least one measured quantity. Based on this information a neural network may determine an estimate of the capacity of the filter. Apparatuses, methods, and computer programs are disclosed.

FIG. 1

EP 4 113 025 A1

**Description**

**TECHNICAL FIELD**

Example embodiments of the present disclosure generally relate to the field of air filtering. In particular, some example embodiments relate to estimation of a capacity of an air filter based on a neural network.

**BACKGROUND**

Availability of sufficiently fresh air is a fundamental precondition for human life. Indoor facilities may be therefore equipped with air purifiers that filter out harmful impurities, for example particles or gases, from the air. Pure indoor air may for example relieve symptoms, raise energy level, and improve concentration, thereby positively affecting the overall quality of life. However, filters of air purifiers tend to clog and therefore it may be desired to replace them from time to time.

**SUMMARY**

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments improve estimation of a capacity of an air filter. This and other benefits may be achieved by the features of the independent claims. Further implementation forms are provided in the dependent claims, the description, and the drawings.

According to a first aspect, an apparatus may comprise: means for receiving an indication of a control input configured to control rate of an airflow through a filter; means for receiving an indication of at least one measured quantity associated with the rate of the airflow through the filter; and means for determining, by a neural network, an estimate of a capacity of the filter based on the indication of the control input and the indication of the at least one measured quantity.

According to an example embodiment of the first aspect, the at least one measured quantity may comprise a rotational speed of a blower configured to at least partially cause the airflow through the filter and/or a pressure difference over the filter.

According to an example embodiment of the first aspect, the neural network may have been trained based on training data comprising a plurality of control inputs, each of the plurality of control inputs being associated with measured quantities and corresponding to a plurality of effective areas of the filter.

According to an example embodiment of the first aspect, the plurality of effective areas of the filter may correspond to different levels of obstruction of the filter.

According to an example embodiment of the first aspect, the plurality of effective areas of the filter may correspond to gradually increasing or decreasing levels of obstruction of the filter.

According to an example embodiment of the first aspect, the apparatus may further comprise: means for training the neural network based on a loss function comprising one of: the estimate of the capacity of the filter and an effective area of the filter, and the estimate of the capacity of the filter and a level of obstruction of the filter.

According to an example embodiment of the first aspect, the apparatus may comprise an air purifier comprising the blower and the filter.

According to an example embodiment of the first aspect, the apparatus may further comprise: means for providing an indication of the estimate of the level of capacity of the filter to a user.

According to an example embodiment of the first aspect, the apparatus may further comprise: means for receiving the indication of the control input and the indication of the at least one measured quantity from a second apparatus over a communication network.

According to an example embodiment of the first aspect, the apparatus may further comprise: means for transmitting an indication of the estimate of the level of capacity of the filter to the second apparatus or a third apparatus.

According to an example embodiment of the first aspect, the apparatus may comprise a server, the second apparatus may comprise an air purifier, and/or the third apparatus may comprise a mobile device.

According to a second aspect, a method may comprise receiving an indication of a control input configured to control rate of an airflow through a filter; receiving an indication of at least one measured quantity associated with the rate of the airflow through the filter; and determining, by a neural network, an estimate of a capacity of the filter based on the indication of the control input and the indication of the at least one measured quantity.

According to an example embodiment of the second aspect, the at least one measured quantity may comprise a rotational speed of a blower configured to at least partially cause the airflow through the filter and/or a pressure difference over the filter.

According to an example embodiment of the second aspect, the neural network may be trained of may have been trained based on training data comprising a plurality of control inputs, each of the plurality of control inputs being associated with measured quantities and corresponding to a plurality of effective areas of the filter.

According to an example embodiment of the second aspect, the plurality of effective areas of the filter may correspond to different levels of obstruction of the filter.

According to an example embodiment of the second aspect, the plurality of effective areas of the filter may correspond to gradually increasing or decreasing levels of obstruction of the filter.

According to an example embodiment of the second aspect, the method may further comprise: training the neural network based on a loss function comprising one of: the estimate of the capacity of the filter and an effective area of the filter, and the estimate of the capacity of the filter and a level of obstruction of the filter.

According to an example embodiment of the second aspect, the method may be implemented by an air purifier comprising the blower and the filter.

According to an example embodiment of the second aspect, the method may further comprise: providing an indication of the estimate of the level of capacity of the filter to a user.

According to an example embodiment of the second aspect, the method may further comprise: receiving the indication of the control input and the indication of the at least one measured quantity from a second apparatus over a communication network.

According to an example embodiment of the second aspect, the method may further comprise: transmitting an indication of the estimate of the level of capacity of the filter to the second apparatus or a third apparatus.

According to an example embodiment of the second aspect, the method may be implemented by a server, the second apparatus may comprise an air purifier, and/or the third apparatus may comprise a mobile device.

According to a third aspect, a method may comprise: obtaining training data comprising a plurality of control inputs, wherein each of the plurality of control inputs is associated with measured quantities corresponding to a plurality of effective areas of a filter; and training a neural network based on a loss function comprising one of: an estimate of a capacity of the filter provided by the neural network and an effective area of the filter, and the estimate of the capacity of the filter provided by the neural network and a level of obstruction of the filter.

According to a fourth aspect, a computer program or a computer program product may comprise program code configured to, when executed by an apparatus, cause the apparatus at least to: receive an indication of a control input configured to control rate of an airflow through a filter; receive an indication of at least one measured quantity associated with the rate of the airflow through the filter; and determine, by a neural network, an estimate of a capacity of the filter based on the indication of the control input and the indication of the at least one measured quantity. The program code may be further configured to, when executed by the apparatus, cause the apparatus to perform any example embodiment of the method of the second or third aspect.

According to a fifth aspect, a system may comprise: an air purifier comprising a blower and a filter, wherein the blower is configured to at least partially cause an airflow through the filter; and a server comprising: means for receiving an indication of a control input configured to control rate of the airflow through the filter; means for receiving an indication of at least one measured quantity associated with the rate of the airflow; and means for determining, by a neural network, an estimate of a capacity of the filter based on the indication of the control input and the indication of the at least one measured quantity.

According to a sixth aspect, and apparatus may comprise: at least one processor; and at least one memory including computer program code; the at least one memory and the computer program code configured to, with the at least one processor, cause the apparatus at least to: receive an indication of a control input configured to control rate of an airflow through a filter; receive an indication of at least one measured quantity associated with the rate of the airflow through the filter; and determine, by a neural network, an estimate of a capacity of the filter based on the indication of the control input and the indication of the at least one measured quantity. The program code may be further configured to, with the at least one processor, cause the apparatus to perform any example embodiment of the method of the second or third aspect.

Many of the attendant features will be more readily appreciated as they become better understood by reference to the following detailed description considered in connection with the accompanying drawings.

## DESCRIPTION OF THE DRAWINGS

The accompanying drawings, which are included to provide a further understanding of the example embodiments and constitute a part of this specification, illustrate example embodiments and together with the description help to explain the example embodiments. In the drawings:

FIG. 1 illustrates an example of an air purifier comprising a blower, an air filter, and a neural network configured to estimate a capacity of the air filter, according to one or more example embodiments;
FIG. 2 illustrates an example of a system comprising an air purifier and a server with a neural network configured to estimate a capacity of an air filter of the air purifier, according to one or more example embodiments;

FIG. 3 illustrates an example of an apparatus configured to practice one or more example embodiments;

FIG. 4 illustrates an example of a neural network configured to estimate a capacity of an air filter, according to one or more example embodiments;

FIG. 5 illustrates examples of rotational speeds of a blower for different air flow rates with and without obstruction of an air filter, according to one or more example embodiments;

FIG. 6 illustrates an example of rotational speed measurements with different levels of obstruction of an air filter, according to one or more example embodiments;

FIG. 7 illustrates an example of generation of training data for training a neural network to estimate a capacity of an air filter, according to one or more example embodiments;

FIG. 8 illustrates an example of training a neural network to estimate a capacity of a filter, according to one or more example embodiments;

FIG. 9 illustrates an example of a method for estimating a capacity of a filter, according to one or more example embodiments; and

FIG. 10 illustrates an example of a method for training a neural network for estimating a capacity of a filter, according to one or more example embodiments.

Like references are used to designate like parts in the accompanying drawings.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of steps for constructing and operating the example. However, the same or equivalent functions and sequences may be accomplished by different examples.

Example embodiments of the present disclosure may exploit the influence of filter clogging to the relationship between a desired air flow rate and at least one measured quantity of an air purifier. According to an example embodiment, an apparatus may receive an indication of a control input configured to control the rate of an airflow through a filter and an indication of at least one measured quantity, for example rotational speed of a blower or a pressure difference over the filter. Based on this information a neural network may determine an estimate of the capacity of the filter. This enables capacity of the filter to be accurately estimated with low complexity and over a wide range of operating points with respect to the value of the control input and the level of filter clogging.

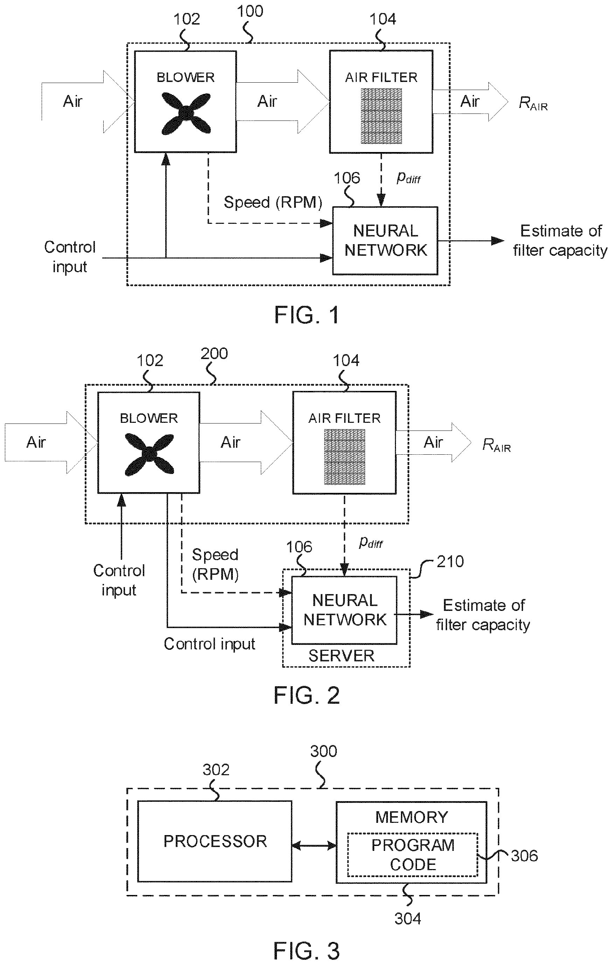

FIG. 1 illustrates an example of an air purifier comprising a blower, an air filter, and a neural network configured to estimate a capacity of the air filter, according to one or more example embodiments. The blower 102 of the air purifier 100 may cause an airflow through the air filter 104 in order to enable filtering the air and provision of purified air by the air purifier 100. It is however noted that the blower 102 may not be the only component of the air purifier 100 that causes or affects the rate of the airflow through the air filter 104. The blower 102 may be therefore applied to at least partially cause the airflow through the air filter 104, for example to control the rate of the airflow.

The air purifier 100 may be configured with a user interface, such as for example a knob, touch screen, keypad, or the like, for receiving a control input for controlling the rate of the airflow. In general, the control input may be configured to adjust the power of the blower 102, for example as a desired air flow rate between 90-330 $m^3$/h. The user may not be however always aware of the actual airflow rate associated with a particular value of the control input. The control input may for example indicate the airflow rate as a percentage of a full power.

Alternatively, the control input may be received over a communication interface, for example to enable remote controlling of the air purifier 100 by a human user or a control device. The control input may be generally used to indicate a desired rate of airflow to be produced by the air purifier 100, e.g., the rate of airflow ($R_{AIR}$) through the air filter 104. Based on the control input, the air purifier 100 may adjust operating parameter(s) of the blower 102 such that the desired airflow through the air filter 104 is at least substantially achieved. For example, when the air filter 104 gets more and more clogged, a control algorithm of the air purifier 100 may increase the rotational speed (RPM) of the blower 102 to account for the clogging and to produce the desired rate of airflow. The rotational speed of the blower 102 resulting from a certain control input may be therefore used as a basis for estimating the capacity (level of clogging) of the air filter 104.

Since the air filter 104 causes resistance to the air flow, the air pressure may be different at the different sides of the air filter 104. Hence, a pressure difference ($p_{diff}$) may be observed over the air filter 104. The pressure difference may be dependent on the level of clogging and therefore the pressure difference may be used as an alternative, or additional, quantity for estimating the capacity of the air filter 104.

Estimation of the capacity of the air filter 104 may be advantageously performed based on a neural network 106. In the example of FIG. 1, the neural network 106 is integrated within the air purifier 100. The neural network 106 may for example reside and/or be executed on a microcontroller of the air purifier 100. The neural network 106 may receive an indication of the control input, for example an indication of a value of the control input, e.g. a desired rate of airflow. The neural network 106 may further receive an indication of the rotational speed (RPM) and/or the pressure difference ($p_{diff}$). The rotational speed may be measured for example by a tachometer provided at the air purifier 100. The pressure difference may be measured for example based on two pressure sensors provided at different sides of the air filter 104 with respect to the airflow.

In general, the neural network 106 may be configured to estimate the capacity of the air filter 104 based on the control input and any suitable measured quantity(ies) that are associated with, for example dependent on, the control input. Hence, the rotational speed of the blower 102 and the pressure difference over the air filter 104 are provided as examples of the possible quantities to be measured. The air purifier 100 may provide an indication of the estimate of the capacity of the filter to a user. The indication may be provided for example by illuminating a light (e.g. LED) of a particular colour that is associated with the estimated capacity level. The indication may be in general provided by any suitable means, for example as audible or visual indication(s). In one example, the air purifier 100 may transmit an indication of the capacity level to another device, for example a mobile device of the user. Training of the neural network 106 for the task of filter capacity estimation is further described below.

Even though some example embodiments have been described using an air purifier as an example, it is appreciated that the example embodiments may be in general applied to any devices comprising an air filter such as ventilation machines, air heating machines, cooker hoods, roof fan systems, or the like, for example any HVAC (heating, ventilation, and air conditioning) systems.

FIG. 2 illustrates an example of a system comprising an air purifier and a server with a neural network configured to estimate a capacity of an air filter of the air purifier, according to one or more example embodiments. The air purifier 200 may comprise the blower 102 and the air filter 104, similar to the air purifier 100. However, the neural network 106 may be provided on a server 210. However, the neural network 106 may be in general provided at an apparatus that is external to the air purifier 200. Even though example embodiments have been described by using the server 210 as an example of such apparatus, it is appreciated that the neural network 106 may be alternatively provided on another type of apparatus, for example a mobile device such as a mobile phone, a tablet, or the like. The neural network 106 may be downloadable to such apparatus, for example as part of, or along with, program code of a mobile application.

The server 210 may receive the indication of the control input and an indication of the measured quantity(ies) and a based on this information the neural network 106 may determine the estimate of the capacity of the air filter 104. The indications of the control input and the measured quantity(ies) may be received over a communication interface, for example a wired or wireless communication network. This enables remote estimation of the capacity of the air filter 104. For example, a single neural network 106 may be used for estimating filter capacity of multiple air purifiers 200 that are of the same type. The server 210 may be also equipped with multiple instances of the neural network 106 trained for different types of air purifiers 200. The information received from the air purifier 200 may therefore comprise an indication of a type or a model of the air purifier 200. Based on the type or model the server 210 may select a corresponding instance of the neural network 106 for estimating the filter capacity. Management of different types of air purifiers 200 may be therefore efficiently provided by a single server. The server 210 may transmit an indication of the estimated capacity level to another device, for example the air purifier 200 or the user, for example via a mobile application downloaded to the mobile device of the user.

FIG. 3 illustrates an example embodiment of an apparatus 300, for example the air purifier 100, 200, or a component thereof, the server 210, or in general any apparatus configured to estimate capacity of an air filter. The apparatus 300 may comprise at least one processor 302. The at least one processor 302 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware (HW) accelerator, a special-purpose computer chip, or the like.

The apparatus 300 may further comprise at least one memory 304. The at least one memory 304 may be configured to store, for example, computer program code or the like, for example operating system software and application software. The at least one memory 304 may comprise one or more volatile memory devices, one or more non-volatile memory devices, and/or a combination thereof. For example, the at least one memory 304 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 300 may further comprise a communication interface (not shown) configured to enable the apparatus 300 to transmit and/or receive information, for example information about parameters and/or functionality of an air purifier. The communication interface may comprise an external communication interface, for example a wireless or wired connection between the air purifier 200 and the server 300, or an internal communication interface, such as for example a bus, within the air purifier 100. The communication interface may be therefore used for internal communications within the apparatus 300 or for external communications with other devices.

The apparatus 300 may further comprise a user interface (not shown) comprising an input device and/or an output device. The input device may take various forms such a keyboard, a touch screen, or one or more embedded control buttons or knobs. The output device may for example comprise a display, a speaker, a set of light sources, or the like.

When the apparatus 300 is configured to implement some functionality, some component and/or components of the apparatus 300, such as for example the at least one processor 302 and/or the at least one memory 304, may be configured to implement this functionality. Furthermore, when the at least one processor 302 is configured to implement some functionality, this functionality may be implemented using the program code 306 comprised, for example, in the at least one memory 304.

The functionality described herein may be performed, at least in part, by one or more computer program product components such as software components. According to an embodiment, the apparatus 300 may comprise processor(s) or processor circuitry, such as for example a microcontroller, configured by the program code 306, when executed, to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-$\alpha$-chip systems (SOCs), Complex Programmable Logic Devices (CPLDs), Graphics Processing Units (GPUs).

The apparatus 300 may therefore comprise means for performing at least one example embodiment described herein. In one example, the means comprises the at least one processor 302, the at least one memory 304 including program code 306 configured to, when executed by the at least one processor, cause the apparatus 300 to perform the example embodiment(s).

The apparatus 300 may comprise for example an air purifier, or in general a computing device, such as for example a server. Although apparatus 300 is illustrated as a single device it is appreciated that, wherever applicable, functions of the apparatus 300 may be distributed to a plurality of devices, for example to implement example embodiments as a cloud computing service.

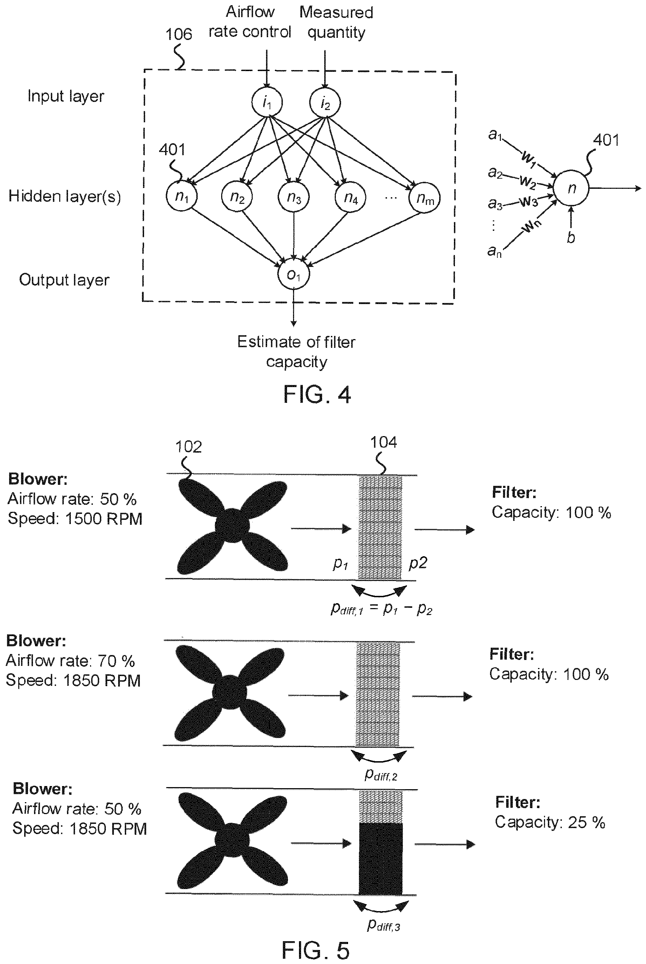

FIG. 4 illustrates an example of a neural network configured to estimate a capacity of an air filter, according to one or more example embodiments. The neural network 106 may be configured to perform a particular task, for example to determine an estimate of the capacity of the air filter 104. The neural network 106 may comprise an input layer, one or more hidden layers, and an output layer. Nodes of the input layer $i_1$ and $i_2$, or in general $i_1$ to $i_n$, may be connected to one or more of the $m$ nodes of the hidden layer, $n_1$ to $n_m$. Nodes of the first hidden layer may be connected to one or more of the nodes of a subsequent hidden layer or, as in the example of FIG. 4, to the output node $o_1$, or in general output nodes $o_1$ to $o_n$, of the output layer. It is appreciated that even though the example neural network of FIG. 4 illustrates a single hidden layer, the neural network 106 may in general apply any suitable number and any suitable type of hidden layers. It is also noted that the number of nodes may be different at each layer of the network and that the neural network may have more than two input nodes and more than one output node, depending for example on the amount of input data and the type of the neural network.

A node may be also referred to as a neuron, an example of which is illustrated next to the neural network 106. The node 401 may be configured to receive one or more inputs, $a_1$ to $a_n$, from one or more nodes of one or more previous layers and compute an output based on the input values received. The node 401 may also receive feedback from one or more nodes of one or more subsequent layers. Inputs may be associated with parameters to adjust the influence of a particular input to the output. For example weights $w_1$ to $w_n$ associated with the inputs $a_1$ to $a_n$ may be used to multiply the input values $a_1$ to $a_n$. The node 401 may be further configured combine the inputs to an output, which may be also referred to as an activation. For example, the node 401 may be configured to sum the modified input values. A bias or offset $b$ may be also applied to add a constant to the combination of modified inputs. Weights and biases may be trainable parameters. For example, when the neural network is trained for a particular task, the values of the weights and/or biases associated with different inputs and different nodes may be updated such that an error associated with performing the task is reduced to an acceptable level.

Furthermore, an activation function $f()$ may be applied to control when and how the node 401 provides its output. Activation function may be for example a non-linear function that is substantially linear in the region of zero but limits the output of the node when the input increases or decreases. Examples of activation functions include, but are not limited to, a step function, a sigmoid function, a tanh function, a ReLu (rectified linear unit) function. The output may be provided to nodes of one or more following layers of the network, and/or to one or more nodes of one or more previous layers of the network.

A forward propagation or a forward pass of the neural network 106 may comprise feeding a set of input data through the layers of the neural network 400 and producing an output. During this process the weights and biases of the neural network 106 affect the activations of the nodes and thereby the output provided by the output layer. Training of the neural network may include changing parameters of the neural network 106 such that its output becomes sufficiently close to a desired output. For example, in the case of a classifying neural network configured for filter capacity estimation, the target of the neural network may be to select a correct capacity level from a discrete set of possible a capacity levels having a certain granularity, for example a set of {20, 40, 60, 80, 100} percent. Training may happen by minimizing or decreasing the output's error, which may be also called the loss.

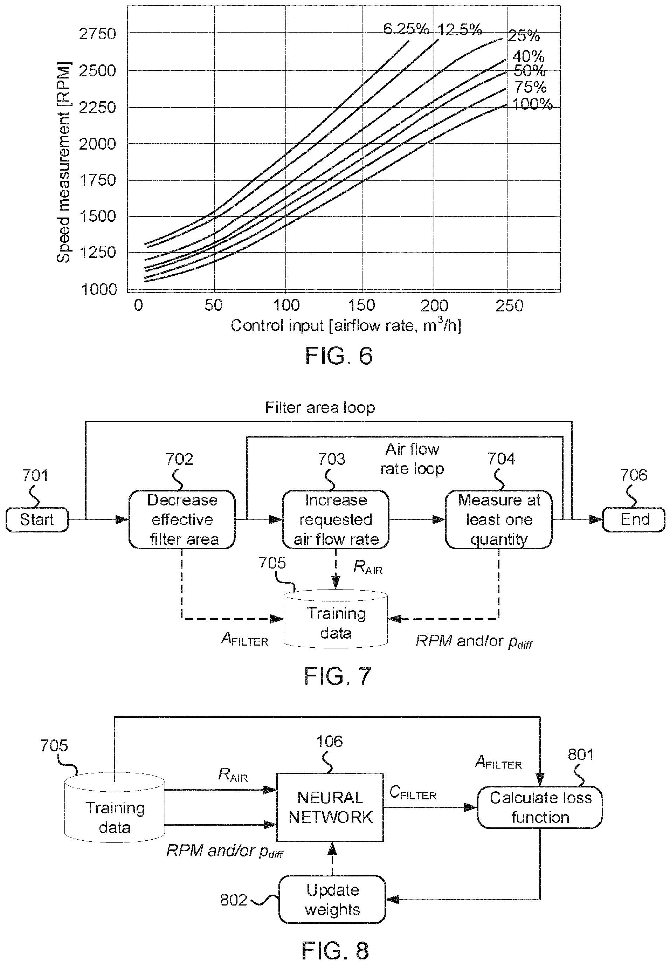

During training the estimated capacity level may be compared to a desired output, for example ground-truth data provided for training purposes, to compute the loss (error). The loss may be calculated based on a loss function. Updating the neural network may be then based on calculating a derivative with respect to trainable parameters of the neural network 106. This may be done for example using a backpropagation algorithm that determines gradients for each layer starting from the final layer of the network until gradients for the trainable parameters have been obtained. Parameters of each layer may be updated accordingly such that the loss is iteratively decreased. Examples of losses include mean squared error, cross-entropy, or the like. Training may comprise an iterative process, where at each iteration the parameters of the neural network are modified based on the current value of the loss function to gradually improve the network's performance for the training data, i.e., to gradually decrease the loss. Training phase of the neural network may be ended after reaching an acceptable error level. If the neural network 106 is properly trained, it learns to generalize its ability to perform the task also for unseen data, that is, data not included in the training data. In an inference phase the trained neural network may be applied for a particular task, for example, to estimate a capacity level of the air filter 104. Training of the neural network 106 is further described with reference to FIG. 7 and FIG. 8.

FIG. 5 illustrates examples of rotational speeds of a blower for different air flow rates with and without obstruction of an air filter, according to one or more example embodiments. In the first example, the control input may indicate that an air flow rate of 50 % is requested. This may result in a rotational speed of 1500 RPM of the blower 102 when the filter capacity is 100%. This may correspond to a first pressure difference ($p_{diff,1}$) over the air filter 104. In the second example, the control input may indicate that an air flow rate of 70 % is requested. This may result in a rotational speed of 1850 RPM when the filter capacity is 100%. This may correspond to a second pressure difference ($p_{diff,2}$) over the air filter 104.

The reduction of the filter capacity may be emulated by decreasing the effective area of the air filter 104, for example by intentionally obstructing part of the filter area such that air flow through the obstructed part of the air filter 104 is prevented or restricted. For example, obstructing 25 % of the filter area may correspond to filter capacity of 75 %. Obstructing 50 % of the filter area may correspond to filter capacity of 50 %. Obstructing 25 % of the filter area may correspond to filter capacity of 75 %.

In the third example of FIG. 5, part of the air filter 104 is obstructed such that the obstruction corresponds to filter capacity of 25 %. This may result in a rotational speed 1850 RPM of the blower 102 and a third pressure difference ($p_{diff,3}$) over the air filter 104.

Obstructing part of the filter area enables to generate training data for training the neural network 106, in order to configure the neural network 106 for estimating the filter capacity based on the control input (e.g. requested air flow rate) and at least one measured quantity, for example the rotational speed and/or the pressure difference, resulting from application of the control input at the air purifier 100, 200. This enables the neural network 106 to be trained without use of partially clogged air filters 104, for which the actual capacity level may be unknown or difficult to estimate with sufficient accuracy. Furthermore, the controlled obstruction of the air filter 104 enables to easily and accurately generate training data even for a large number of levels of filter capacity. A neural network trained this way is therefore capable of accurately estimating the capacity of the air filter 104 with a desired granularity.

FIG. 6 illustrates an example of rotational speed measurements with different levels of obstruction of an air filter, according to one or more example embodiments. Resulting rotational speed of the blower 102 is illustrated as a function of the control input (requested air flow rate in m$^3$/h) for seven different capacity levels 100 %, 75 %, 50 %, 40 %, 25 %, 12.5 %, and 6.25 %. It is observed that the resulting RPM increases along with increasing value of the control input, but that the resulting RPM also increases when the capacity of the air filter 104 decreases. Such multivariate relationship may be difficult to model based on statistical methods. A less complex solution may be however provided by training a neural network to perform the same task, as disclosed herein. This improves estimation accuracy and/or enables the filter capacity estimation functionality to be integrated within air purifies having limited computational resources.

FIG. 7 illustrates an example of generation of training data for training a neural network to estimate a capacity of an air filter, according to one or more example embodiments.

At operation 701, the training may be started. Upon initiation of the training, suitable initial values may be set for the effective filter area ($A_{FILTER}$) and the desired air flow rate ($R_{AIR}$). The effective filter area ($A_{FILTER}$) may indicate the filter area that is not obstructed, for example as a percentage of the total filter area. During training the obstruction of the air filter 104 may be implemented by placing an obstacle, for example a plastic plate, in front (or after) of part of the air filter 104.

At operation 702, the effective area of the air filter 104 may be decreased. However, at the first round of the filter area loop the effective filter area ($A_{FILTER}$) may be set to its initial value. At each round of the filter area loop, the effective filter area ($A_{FILTER}$) may be stored as part of training data 705. The effective areas of the air filter 104 stored at different rounds of the filter area loop correspond to different levels of obstruction of the air filter 104. The amount of change of the effective filter area ($A_{FILTER}$) at operation 702 may, depending on the implementation of the neural network 106, determine the granularity of the filter capacity estimation. For example, if the training data 705 is provided for ten different effective filter areas ($A_{FILTER}$), a classifier neural network may be trained to classify the filter capacity to one of ten capacity levels associated with corresponding effective filter areas ($A_{FILTER}$).

When decreasing the effective filter area ($A_{FILTER}$), the position or size of the obstacle may be changed such that the obstructed filter area increases. Changing the position or size of the obstacle may be performed manually, e.g. by a human operator. The air purifier 100, 200 may alternatively comprise a control system, for example circuitry with mechanical components, configured to automatically change the effective filter area ($A_{FILTER}$), for example by changing the size or position of an obstacle integrated within the air purifier 100, 200. Automatic control of the effective filter area ($A_{FILTER}$) enables training, re-training, or fine-tuning of the neural network 106 after deployment of the air purifier 100, 200, for example to enable adaptation to different operating environments, different types of the air filter 104 (e.g. after replacement), aging of components (e.g. the blower 102), or the like.

At operation 703, the desired air flow rate ($R_{AIR}$) may be increased. However, at the first round of the air flow loop, that is, at the beginning of each round of the filter area loop, the desired air flow rate ($R_{AIR}$) may be set to its initial value. The desired air flow rate ($R_{AIR}$) may be increased at every round of the air flow rate loop. Hence, a sweep of air flow rates ($R_{AIR}$) may be performed for each effective filter area ($A_{FILTER}$). At each round of the air flow rate loop, the desired air flow rate ($R_{AIR}$) may be stored as part of the training data 705. The current air flow rate ($R_{AIR}$) may be stored in association with the current effective filter area ($A_{FILTER}$).

At operation 704, at least one quantity of the air purifier 100, 200 may be measured. The quantity may be associated with, for example dependent on, the desired air flow rate ($R_{AIR}$). Hence, the measured quantity may also reflect the capacity of the filter, because the air purifier 110, 200 may be configured to provide, if possible, the desired air flow rate ($R_{AIR}$) regardless of partial clogging of the air filter 104. As noted above, the at least one quantity may comprise the rotational speed of the blower 102. Alternatively, or additionally, the at least one quantity may comprise the pressure difference over the air filter 104. The rotational speed and the pressure difference may be also seen as operational parameters of the air purifier 100, 200. Hence, the at least one quantity may comprise one or more operational parameters of the air purifier 100, 200. The at least one quantity, for example the rotational speed (RPM) and/or the pressure difference ($p_{diff}$), may be stored as part of the training data 705. The current measured quantity(ies) may be stored in association with the current effective filter area ($A_{FILTER}$).

Examples of the training data 705 corresponding to the measurements of FIG. 6 are provided below. In a first example, the training data 705 comprises an indication of the desired air flow rate (%) associated with the resulting rotational speed (RPM) for different effective filter areas (%, cf. filter capacity).

```
{air_flow_rate: 50, rotational_speed: 1175, effective_filter_area: 100 %}
{air_flow_rate: 50, rotational_speed: 1245, effective_filter_area: 75 %}
{air_flow_rate: 50, rotational_speed: 1280, effective_filter_area: 50 %}
{air_flow_rate: 50, rotational_speed: 1300, effective_filter_area: 40 %}
{air_flow_rate: 50, rotational_speed: 1375, effective_filter_area: 25 %}
{air_flow_rate: 50, rotational_speed: 1485, effective_filter_area: 12.5 %}
{air_flow_rate: 50, rotational_speed: 1530, effective_filter_area: 6.25 %}
```

A similar set of data may be provided also for other air flow rate(s). For example, for air flow rate 150, the training data 705 may comprise the following sets of parameters:

```
{air_flow_rate: 150, rotational_speed: 1745, effective_filter_area: 100 %}
{air_flow_rate: 150, rotational_speed: 1825, effective_filter_area: 75 %}
{air_flow_rate: 150, rotational_speed: 1900, effective_filter_area: 50 %}
{air_flow_rate: 150, rotational_speed: 1970, effective_filter_area: 40 %}
{air_flow_rate: 150, rotational_speed: 2075, effective_filter_area: 25 %}
{air_flow_rate: 150, rotational_speed: 2260, effective_filter_area: 12.5 %}
{air_flow_rate: 150, rotational_speed: 2320, effective_filter_area: 6.25 %}
```

In general, training data 705 obtained based on M iterations of the air flow rate loop and *N* iterations of the filter area loop may be formulated for example as follows:

```
{air_flow_rate(1):
        rotational_speed_11, effective_filter_area_11;
        rotational_speed_12, effective_filter_area_12;
        rotational_speed_1M, effective_filter _area_1M;
 air_flow_rate(2):
        rotational_speed_21, effective_filter_area_21;
        rotational_speed_22, effective_filter_area_22;
        rotational_speed_2M, effective_filter_area_2M;
 air_flow_rate(N):
        rotational speed N1, effective-filter-area NI;
        rotational_speed_N2, effective_filter_area_N2;
        rotational_speed_NM, effective_filter_area_NM}
```

Each of the N different air flow rates (control inputs) may be therefore associated with $M$ rotational speeds (measured quantities) corresponding to respective effective filter areas.

Instead of the rotational speed, the measured quantity may comprise the pressure difference. In this case, the training data 705 may be formulated for example as follows:

```
{air_flow_rate_1:
        pressure_difference11, effective_filter_area_11;
        pressure_difference_12, effective_filter_area_12;
        pressure_difference_1M, effective_filter_area_1M;
 air_flow_rate_2:
        pressure_difference_21, effective_filter_area_21;
        pressure_difference_22, effective_filter_area_22;
        pressure_difference_2M, effective_filter_area_2M;
 air_flow_rate_N:
        pressure_difference_N1, effective_filter_area_N1;
        pressure_difference_N2, effective_filter_area_N2;
        pressure_difference_NM, effective_filter_area_NM }
```

Each of the *N* different air flow rates (control inputs) may be therefore associated with *M* pressure differences (measured quantities) corresponding to respective effective filter areas.

The training data 705 may also comprise more than one measured quantity, for example both the rotational speed and the pressure difference. In this case, the training data 705 may be formulated for example as follows:

```
{air_flow_rate_1:
    rotational_speed_11, pressure_difference_11, effective_filter_area_11;
    rotational_speed_12, pressure_difference_12, effective_filter_area_12;
    rotational_speed_1M, pressure_difference_1M, effective_filter_area_1M;
 air_flow_rate_2:
    rotational_speed_21, pressure_difference_21, effective_filter_area_21;
    rotational_speed_22, pressure_difference_22, effective_filter_area_22;
    rotational_speed_2M, pressure_difference_2M, effective_filter_area_2M;
 air_flow_rate_N:
    rotational_speed_N1, pressure_difference_N1, effective_filter_area_N1;
    rotational_speed_N2, pressure_difference_N2, effective_filter_area_N2;
    rotational_speed_NM, pressure_difference_NM, effective_filter_area_NM }
```

Each of the *N* different air flow rates (control inputs) may be therefore associated with *M* rotational speeds and pressure differences (measured quantities) corresponding to respective effective filter areas. It is however noted that in any of the above examples *M* may be different for the different air flow rates. It is also noted that the training data 705 may be stored in any suitable format, for example as measured quantities (of for example RPM and/or $p_{\text{diff}}$) associated with different control inputs for different effective filter areas. Therefore, in general the training data 705 may comprise a plurality of control inputs, where each control input may be associated with measured quantities corresponding to a plurality of effective areas of the air filter 104.

It is noted that even though operations 702 and 703 have been described as comprising decreasing the effective filter area ($A_{FILTER}$) and increasing the desired airflow rate ($R_{AIR}$), the effective filter area ($A_{FILTER}$) and the requested air flow rate ($R_{AIR}$) may be varied in any suitable manner, e.g. increased, decreased, or changed based on a non-monotonic pattern. Any of such methods may result in suitable training data 705 comprising data associated with a particular operating point of the air purifier 100, 200.

However, according to an example embodiment the effective areas of the filter ($A_{FILTER}$) may correspond to gradually increasing or decreasing levels of obstruction of the air filter 104. This enables the training data to be collected effectively, since unnecessary movement of the obstacle with respect to the air filter 104 may be avoided. The gradual increment or decrement of the level of obstruction may comprise a constant increment or decrement. Alternatively, the level of the increment or decrement may be variable, for example based on the previous effective area of the air filter 104. For example, the increment may be larger at a higher level of the effective filter area when compared to the increment at a lower level of the effective filter area. Or, the decrement may be smaller at a lower level of the effective filter area when compared to the decrement at a higher level of the effective filter area. This enables to provide finer estimation granularity at certain range of operating points and hence enables more efficient training without compromising estimation quality at the desired operating points, for example at high levels of clogging.

It is further noted that operations of the training procedure may be arranged in any suitable order. For example, order of the operations 702 and 703 may be switched such that the filter area loop is run inside the air flow rate loop. However, the order illustrated in FIG. 7 may improve efficiency, since the change of the effective area of the filter, which may involve either manual or automatic movement of the obstacle, may need to be performed less frequently.

The procedure of FIG. 7 may be executed until the training data 705 has been collected for a set of effective filter areas and air flow rates.

At operation 706, the procedure may be ended.

FIG. 8 illustrates an example of training a neural network to estimate a capacity of a filter, according to one or more example embodiments. The procedure of FIG. 8 may be performed after generation of the training data 705, or in parallel with generation of the training data 705. Parallel performance of the training with collection (cf. FIG. 7) of the training data 705 enables faster training of the neural network 106. Before training the trainable parameters, for example weights, of the neural network 116 may be initiated at any suitable values, for example randomly.

A desired air flow rate ($R_{AIR}$) and corresponding measure quantity(ies), for example the resulting rotational speed (RPM) of the blower 102 and/or the pressure difference ($p_{diff}$) over the air filter 104, retrieved from the training data 705 may be provided as input to the neural network 106. When providing the neural network 106 with more than one measured quantity, the neural network 106 may be configured with additional inputs compared to FIG. 4. For example, the input layer may comprise more than two nodes. Using its current parameters, the neural network 106 may determine and output an estimate of the capacity ($C_{FILTER}$) of the air filter 104 based on the input data. At the beginning of the training, the estimate may not be very accurate, but during the training the neural network 106 learns to estimate the filter capacity with sufficient accuracy. The effective filter area ($A_{FILTER}$) associated in the training data 705 with the current inputs of the neural network 106 may be used as ground-truth data for training the neural network 106.

At operation 801, a loss function may be therefore calculated based on the current output of the neural network, i.e. the estimated filter capacity ($C_{FILTER}$), and the ground-truth data, e.g. the effective filter area ($A_{FILTER}$). In general, the loss function may comprise both the estimate of the filter capacity ($C_{FILTER}$) and the effective area of the filter ($A_{FILTER}$). The actual formulation of the loss function may vary according to the particular implementation of the neural network 106. For example, if the neural network is configured to provide a single output value indicative of the capacity level, such as for example in the example of FIG. 4. The loss function may for example comprise a difference or a squared difference between the output of the neural network and the ground-truth data, for example $loss = |C_{FILTER} - A_{FILTER}|$ or $loss = |C_{FILTER} - A_{FILTER}|^2$. If the neural network 106 is configured as a classifier network, providing as its output a vector indicative of a probability distribution of the filter capacity for a set of discrete values, the loss function may comprise a mean square error of the output of the neural network, e.g. $C_{FILTER} = [P(c_1), P(c_2), ..., P(c_K)]$, and a ground-truth vector $A_{FILTER} = [a_1, a_2, ..., a_K]$ comprising a single non-zero entry for the correct level of effective filter area, for example

$$loss = \frac{1}{K} \sum_{k=1}^{K} (P(c_k) - a_k)^2$$

.

It is however noted that instead of the effective filter area ($A_{FILTER}$), a level of obstruction of the air filter 104 may be collected as part of the training data 705 and used as ground-truth data for training the neural network, for example for calculating the loss function. Therefore, the level of obstruction, being directly linked to the remaining effective filter area ($A_{FILTER}$), provides another parameter that may be exploited for training the neural network 106. Training data inputs, for example the air flow rates, rotational speeds, and/or pressure differences, corresponding to different effective areas of the air filter 104 may therefore comprise data linked with different levels of obstructions. The correspondence to the effective filter areas may be therefore provided either by directly linking the data to the effective filter area ($A_{FILTER}$) or by linking the data to the level of obstruction.

The training may be ended when the calculated loss decreases below a predetermined threshold. After training, the neural network 106 may be deployed for example at the air purifier 100, 200, or the server 210. However, as noted above, the neural network 106 may be optionally further trained after the deployment.

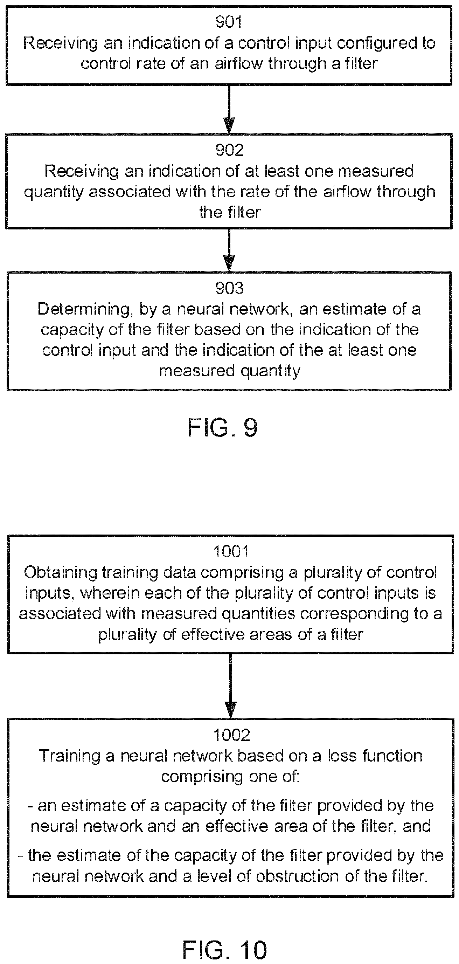

FIG. 9 illustrates an example of a method for estimating a capacity of a filter, according to one or more example embodiments.

At 901, the method may comprise receiving an indication of a control input configured to control rate of an airflow through a filter;

At 902, the method may comprise receiving an indication of at least one measured quantity associated with the rate of the airflow through the filter; and

At 903, the method may comprise determining, by a neural network, an estimate of a capacity of the filter based on the indication of the control input and the indication of the at least one measured quantity.

FIG. 10 illustrates an example of a method for training a neural network for estimating a capacity of a filter, according to one or more example embodiments.

At 1001, the method may comprise obtaining training data comprising a plurality of control inputs, wherein each of the plurality of control inputs is associated with measured quantities corresponding to a plurality of effective areas of a filter.

At 1002, the method may comprise training a neural network based on a loss function comprising one of: an estimate of a capacity of the filter provided by the neural network and an effective area of the filter, and the estimate of the capacity of the filter provided by the neural network and a level of obstruction of the filter. The method may comprise a method for manufacturing a neural network.

Further features of the methods directly result from the functionalities and parameters of the apparatuses 100, 200, 300, and methods and procedures as described in the appended claims and throughout the specification, and are therefore not repeated here. Different variations of the methods may be also applied, as described in connection with the various example embodiments. For example, one or more steps of the methods may be performed in a different order.

An apparatus, for example an air purifier or a server, may be configured to perform or cause performance of any aspect of the methods described herein. Further, a computer program or a computer program product may comprise program code configured to, when executed by an apparatus, the apparatus to perform any aspect of the methods described herein. Further, an apparatus may comprise means for performing any aspect of the method(s) described herein. According to an example embodiment, the means comprises at least one processor, and at least one memory including program code, the at least one processor, and program code configured to, when executed by the at least one processor, cause performance of any aspect of the method(s).

Any range or device value given herein may be extended or altered without losing the effect sought. Also, any embodiment may be combined with another embodiment unless explicitly disallowed.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks, or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of example embodiments. Although various embodiments have been described above with a certain degree of particularity, or with reference to one or more individual embodiments, those skilled in the art could make numerous alterations to the disclosed embodiments without departing from scope of this specification. Hence, although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

## Claims

1. An apparatus, comprising:

   means for receiving an indication of a control input comprising a requested rate of an airflow through a filter;
   means for receiving an indication of a rotational speed of a blower configured to at least partially cause the airflow through the filter; and

means for determining, by a neural network, an estimate of a capacity of the filter based on the indication of the control input and the rotational speed of the blower.

2. The apparatus according to claim 1, wherein the neural network is configured to output the estimate of the capacity of the filter.

3. The apparatus according to claim 1 or claim 2, wherein the neural network has been trained based on training data comprising a plurality of control inputs, each of the plurality of control inputs being associated with rotational speeds of the blower and corresponding to a plurality of effective areas of the filter.

4. The apparatus according to claim 3, further comprising means for training the neural network based on a loss function comprising one of:

the estimate of the capacity of the filter and an effective area of the filter, and
the estimate of the capacity of the filter and a level of obstruction of the filter.

5. The apparatus according to any preceding claim, wherein the apparatus comprises an air purifier comprising the blower and the filter.

6. The apparatus according to claim 5, further comprising: means for providing an indication of the estimate of the capacity of the filter to a user.

7. The apparatus according to any of claims 1 to 4, further comprising: means for receiving the indication of the control input and the indication of the rotational speed of the blower from a second apparatus over a communication network.

8. The apparatus according to claim 7, further comprising: means for transmitting an indication of the estimate of the capacity of the filter to the second apparatus or a third apparatus.

9. The apparatus according to claim 7 or claim 8, wherein the apparatus comprises a server, wherein the second apparatus comprises an air purifier, and/or wherein the third apparatus comprises a mobile device.

10. A method, comprising:

receiving an indication of a control input comprising a requested rate of an airflow through a filter;
receiving an indication of a rotational speed of a blower configured to at least partially cause the airflow through a filter; and
determining, by a neural network, an estimate of a capacity of the filter based on the indication of the control input and the rotational speed of the blower.

11. The method according to claim 11, further comprising: training the neural network based on training data comprising pairs of the control inputs and rotational speeds corresponding to a plurality of effective areas of the filter.

12. The method according to claim 11, wherein the plurality of effective areas of the filter are emulated by intentionally obstructing part of the filter such that the airflow through the obstructed part of the filter is prevented or restricted.

13. The method according to claim 11 or claim 12, wherein the plurality of effective areas of the filter correspond to gradually increasing or decreasing levels of obstruction of the filter.

14. A computer program comprising program code configured to, when executed by an apparatus, cause the apparatus at least to:

receive an indication of a control input comprising a requested rate of an airflow through a filter;
receive an indication of a rotational speed of a blower configured to at least partially cause the airflow through a filter; and
determine, by a neural network, an estimate of a capacity of the filter based on the indication of the control input and the rotational speed of the blower.

15. A system comprising:

an air purifier comprising a blower and a filter, wherein the blower is configured to at least partially cause an airflow through the filter; and
a server comprising:

means for receiving an indication of a control input comprising a requested rate of the airflow through the filter;
means for receiving an indication of a rotational speed of thet blower; and
means for determining, by a neural network, an estimate of a capacity of the filter based on the indication of the control input and the rotational speed of the blower.

FIG. 1

FIG. 2

FIG. 3

Airflow rate control

Measured quantity

106

Input layer

$i_1$    $i_2$

401

Hidden layer(s)

$n_1$  $n_2$  $n_3$  $n_4$  ...  $n_m$

Output layer

$o_1$

Estimate of filter capacity

$a_1$
$a_2$
$a_3$
$a_n$

$w_1$
$w_2$
$w_3$
$w_n$

401

$n$

$b$

## FIG. 4

102    104

**Blower:**
Airflow rate: 50 %
Speed: 1500 RPM

**Filter:**
Capacity: 100 %

$p_1$    $p2$

$p_{diff,1} = p_1 - p_2$

**Blower:**
Airflow rate: 70 %
Speed: 1850 RPM

**Filter:**
Capacity: 100 %

$p_{diff,2}$

**Blower:**
Airflow rate: 50 %
Speed: 1850 RPM

**Filter:**
Capacity: 25 %

$p_{diff,3}$

## FIG. 5

FIG. 6

FIG. 7

FIG. 8

901
Receiving an indication of a control input configured to control rate of an airflow through a filter

902
Receiving an indication of at least one measured quantity associated with the rate of the airflow through the filter

903
Determining, by a neural network, an estimate of a capacity of the filter based on the indication of the control input and the indication of the at least one measured quantity

FIG. 9

1001
Obtaining training data comprising a plurality of control inputs, wherein each of the plurality of control inputs is associated with measured quantities corresponding to a plurality of effective areas of a filter

1002
Training a neural network based on a loss function comprising one of:

- an estimate of a capacity of the filter provided by the neural network and an effective area of the filter, and

- the estimate of the capacity of the filter provided by the neural network and a level of obstruction of the filter.

FIG. 10

Europäisches
Patentamt

European
Patent Office

Office européen
des brevets

## EUROPEAN SEARCH REPORT

Application Number

EP 22 18 1335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 108 317 664 B (GREE ELECTRIC APPLIANCES INC ZHUHAI) 11 August 2020 (2020-08-11)<br>* the whole document * | 1,2,6-8,<br>10,14<br>3-6,9,<br>11-13,15 | INV.<br>F24F8/108<br>F24F11/39<br>F24F11/52<br>F24F11/56 |
| Y | WO 2020/239966 A1 (KONINKLIJKE PHILIPS NV [NL]) 3 December 2020 (2020-12-03)<br>* pages 9-10; claim 1 * | 3-6,<br>11-13 | |
| Y | US 2020/003440 A1 (KIM DAE OK [KR]) 2 January 2020 (2020-01-02)<br>* paragraphs [0102] - [0107] * | 9,15 | |
| Y | CN 111 878 969 A (NINGBO AUX ELECTRIC CO LTD; AUX AIR CONDITIONING CO LTD) 3 November 2020 (2020-11-03)<br>* paragraphs [0026] - [0029] * | 12,13 | |

TECHNICAL FIELDS
SEARCHED      (IPC)

F24F

The present search report has been drawn up for all claims

| Place of search | Date of completion of the search | Examiner |
|---|---|---|
| Munich | 4 November 2022 | Blot, Pierre-Edouard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 1335

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2022

| Patent document cited in search report | | Publication date | Patent family member(s) | | Publication date |
|---|---|---|---|---|---|
| CN 108317664 | B | 11-08-2020 | NONE | | |
| WO 2020239966 | A1 | 03-12-2020 | CN | 113906259 A | 07-01-2022 |
| | | | EP | 3977020 A1 | 06-04-2022 |
| | | | US | 2022249999 A1 | 11-08-2022 |
| | | | WO | 2020239966 A1 | 03-12-2020 |
| US 2020003440 | A1 | 02-01-2020 | KR | 20190110966 A | 01-10-2019 |
| | | | US | 2020003440 A1 | 02-01-2020 |
| | | | WO | 2019172736 A2 | 12-09-2019 |
| CN 111878969 | A | 03-11-2020 | NONE | | |

EPO FORM P0459

For more details about this annex : see Official Journal of the European Patent Office, No. 12/82